# EUROPÄISCHE PATENTSCHRIFT

(11) **EP 3 228 036 B1**
(45) Veröffentlichungstag und Bekanntmachung des Hinweises auf die Patenterteilung: **20.02.2019**
(21) Anmeldenummer: 15805154.0
(22) Anmeldetag: 03.12.2015
(51) Int. Cl.: H04L 1/08, H04L 12/40, H04L 12/939

(54) **VERFAHREN UND STEUERGERÄT ZUR ÜBERTRAGUNG SICHERHEITSRELEVANTER DATEN IN EINEM KRAFTFAHRZEUG MITTELS EINES ETHERNET-STANDARDS**
METHOD AND CONTROL DEVICE FOR TRANSMITTING SAFETY-RELEVANT DATA IN A MOTOR VEHICLE BY MEANS OF AN ETHERNET STANDARD
PROCÉDÉ ET DISPOSITIF DE COMMANDE POUR LA TRANSMISSION DE DONNÉES RELATIVES À LA SÉCURITÉ DANS UN VÉHICULE AUTOMOBILE AU MOYEN D'UNE NORME ÉTHERNET

(30) Priorität: 04.12.2014 DE 102014224944
(43) Veröffentlichungstag der Anmeldung: 11.10.2017
(73) Patentinhaber: Continental Automotive GmbH, 30165 Hannover (DE)
(72) Erfinder: ZINNER, Helge, 93049 Regensburg (DE)
(86) Internationale Anmeldenummer: PCT/EP2015/078515
(87) Internationale Veröffentlichungsnummer: WO 2016/087584

(56) Entgegenhaltungen:
- EP-A1- 1 657 888
- IEC ED - IEC: "Part 3: Parallel Redundancy Protocol (PRP) andHigh-availability Seamless Redundancy (HSR)", INTERNET CITATION, 31. Dezember 2010 (2010-12-31), Seiten 1-62, XP002680227, Gefunden im Internet: URL:http://lamspeople.epfl.ch/kirrmann/Pub s/IEC_61439-3/WG15-12-04d_62439-3_AMD_HK_1 01109.pdf [gefunden am 2012-07-18]

## Beschreibung

IEC ED-IEC: "Part 3: Parallel Redundancy Protocol and High availability Seamless Redundancy, Internet Citation XP-002680227 (D1) betrifft ein Kommunikationsprotokoll mit paralleler Redundanz basierend auf dem Ethernet-Protokoll, wobei eine DANH-Quelle Rahmen von höheren Schichten (sog. C-Frames) dupliziert und diese (sog. A-Frames und B-Frames) jeweils über einen eigenen Port versendet, wobei die redundanten Rahmen mit einem HSR tag versehen werden. Eine DANH-Senke empfängt die identischen Rahmen von jedem Port, entfernt das HSR tag des ersten empfangenen Rahmens vor dem Weiterleiten an höhere Schichten und verwirft das Duplikat. Werden zwei Ringe gekoppelt, so sorgt als Zwischenknoten die sog. QuadBox, siehe Fig. 17 der D1, dafür, dass zwei Exemplare desselben Rahmen von dem ersten Ring zu dem zweiten Ring transferriert werden. Eine QuadBox weist an ihrem Ausgang zwei Ports auf, wobei Rahmen und Duplikat des Rahmens über jeweils einen Port versendet werden. Original und Duplikat zirkulieren im Ring in entgegengesetzter Richtung.

Die Erfindung betrifft ein Verfahren zur Übertragung sicherheitsrelevanter Daten in einem Kraftfahrzeug mittels eines Ethernet-Standards, insbesondere des Ethernet-Standards IEEE 802.3, welcher ggf. in Verbindung mit dem Standard IEEE 802.1 Q auch als IEEE 802.3 MAC tagged bezeichnet wird. Die Übertragung der sicherheitsrelevanten Daten in dem Kraftfahrzeug erfolgt von einem Sender über mindestens einen auch als "Switch" oder "Bridge" bezeichneten Zwischenknoten zu einem Empfänger. Allgemein handelt es sich bei Sender, Empfänger und Zwischenknoten um Steuergeräte, die die Funktion der Datenübertragung sowie ggf. zusätzliche Funktionen übernehmen.
Ausführungsformen der Erfindung befinden sich in den beigefügten Ansprüchen. Bei dem Verfahren zur Übertragung ist vorgesehen, dass die sicherheitsrelevanten Daten von dem Sender in einem Ethernet-Paket versendet werden, wobei das Ethernet-Paket einen Ethernet-Frame mit dem Dateninhalt aufweist. Der Dateninhalt enthält Kommunikationsinformationen und Daten.
Wesentliche Kommunikationsinformationen sind die Zieladresse, die Senderadresse sowie der Ethertyp, welcher die Payload des Ethernet-Frames beschreibt (also dessen Subprotokoll). Die weiteren Daten beinhalten den zu übertragenden Inhalt der sicherheitsrelevanten Daten sowie ggf. Kontrollfelder, wie eine Check-Summe.
Im Rahmen der Übertragung empfängt der oder jeder Zwischenknoten ein Ethernet-Paket und wertet zumindest einen Teil der Kommunikationsinformationen aus dem Dateninhalt aus. Insbesondere werden die Zieladresse, die Senderadresse und der Ethernet Typ gelesen und bei der weiteren Verarbeitung des Datenpakets berücksichtigt. Die weitere Verarbeitung sieht insbesondere das Weitersenden der Ethernet-Pakete entsprechend den ausgewerteten Kommunikationsinformationen vor.

Die Übertragung der sicherheitsrelevanten Daten ist abgeschlossen, wenn der Empfänger das Ethernet-Paket empfängt und die Kommunikationsinformationen aus dem Dateninhalt auswertet. Wenn er aufgrund dieser ausgewerteten Kommunikationsinformationen tatsächlich der Empfänger der sicherheitsrelevanten Daten ist, werden auch die Daten aus dem Dateninhalt ausgewertet, weil die Übertragung der sicherheitsrelevanten Daten damit beendet ist. In dem Zwischenknoten, d. h. während der Übertragung der sicherheitsrelevanten Daten, findet diese inhaltliche Auswertung nicht statt. Lediglich ein fehlerhafter Frame (CRC-Fehler) würde hier schon verworfen werden.

Dieses vorstehende Verfahren entspricht dem Ethernet-Standard IEEE 802.3, wie er unter http://standards.ieee.org definiert und allgemein verfügbar ist.

Hintergrund der vorliegenden Erfindung ist, dass das Ethernet zunehmend auch im Automobil als neue Vernetzungstechnologie Verwendung findet. Anstelle des Ethernets werden in Automobilen derzeit proprietäre echtzeitfähige Busse für die Datenkommunikation eingesetzt, die aufgrund der gewünschten Sicherheit eine vergleichsweise komplexe Architektur des Kommunikationsnetzwerks bedingen. Dafür bietet der als echtzeitfähiger Kommunikationsbus eingesetzte FlexRay-Bus einen redundanten Kanal zur Erhöhung der Ausfallsicherheit.

Damit Ethernet die derzeit im Automobil eingesetzten echtzeitfähigen Kommunikationsbusse ersetzen kann und zu einer insgesamt weniger komplexen Architektur durch Skaleneffekte führt, muss auch Ethernet Funktionen zur Erreichung einer Redundanz unterstützen. Dies ist insbesondere im Hinblick auf zukünftige Assistenzfunktionen von übergeordneter Bedeutung, weil die geplanten Assistenzfunktionen teilweise die Steuerung des Wagens komplett übernehmen sollen. Dies erfordert eine hohe Sicherheit und entsprechende Redundanzen auf dem Kommunikationskanal. Dabei kann sowohl die Hardware (beispielsweise doppelte Sensoren, doppelte Verkabelung) als auch die Software (verteilte virtuelle Systeme) redundant ausgelegt werden.

Ethernet bietet schon heute Funktionen wie das STP (Spanning Tree Protocol) und das RSTP (Rapid Spanning Tree Protocol), um neue Kommunikationswege im Netzwerk zu finden, falls ein Kommunikationsweg beispielsweise aufgrund eines nicht mehr funktionierenden Kabels oder Links gestört ist. Dies ist natürlich nur dann möglich, wenn in dem Netzwerk physikalisch ein anderer Kommunikationsweg zur Verfügung steht. Die STP- bzw. RSTP-Protokolle erlauben in einem solchen Fall ein schnelles Umschalten im laufenden Betrieb. Ferner wird eine Trunking-Funktion im Rahmen der Ethernet-Anwendungen beschrieben, um Leitungen zu bündeln.

Da Ethernet ursprünglich aber für andere Zwecke entwickelt wurde, bietet es die durch die proprietären Kommunikationsbusse in heutigen Automobilen erreichte Ausfallsicherheit von Haus aus nicht.

Wenn geplant wird, Ethernet als Backbone-Netzwerk im Auto zu verwenden, sind Lösungen notwendig, damit auch Ethernet den heutigen Systemen vergleichbare Funktionen zur Redundanz bieten kann. Ansonsten muss weiterhin auf die proprietären Feldbusse zurückgegriffen werden, die einen verminderten Funktionsumfang aufweisen und zu erhöhter Komplexität und mehr Kosten führen.

Auch die Datenrate dieser proprietären Feldbusse, die heute für sicherheitskritische Systeme im Automobil eingesetzt werden, wird in absehbarer Zukunft nicht mehr ausreichen, da sie für die heute im Kraftfahrzeug bereits vorhandenen Systeme bereits ihre Kapazitätsgrenze erreicht hat.

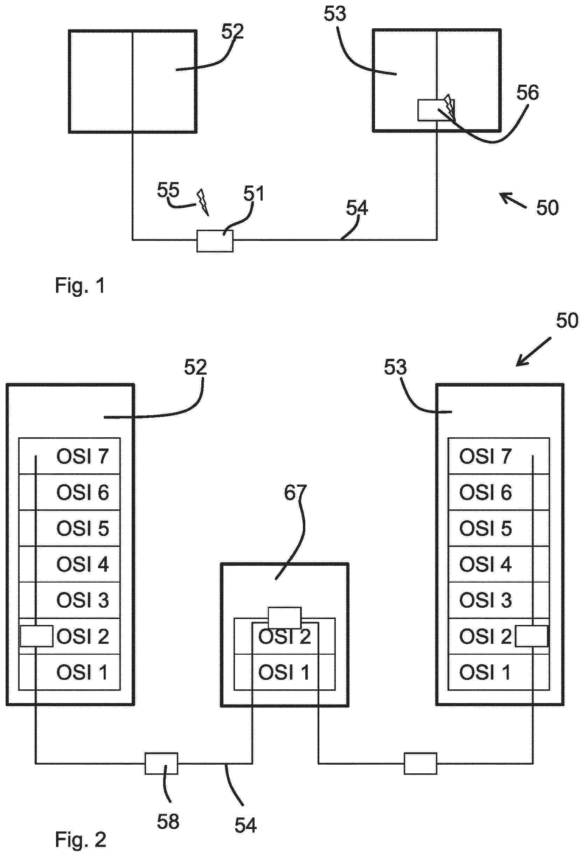

Fehler in der Übertragung können im Ethernet vor allem dadurch auftreten, dass durch fehlende elektromagnetische Verträglichkeit (EMV), Überlast oder sonstige Einflüsse jederzeit einzelne Datenpakete (Ethernet-Pakete) verloren gehen oder verfälscht werden. Dies ist in Fig. 1 schematisch dargestellt, die die Übertragung eines Ethernet-Pakets 51 in einem Übertragungssystem 50 nach dem Ethernet-Standard zeigt. Die Übertragung findet zwischen einem ersten als Sender dienendem Steuergerät 52 und einem zweiten als Empfänger dienendem Steuergerät 53 statt. Auf dem Übertragungsweg 54 wird das Ethernet-Paket durch eine Störung 55 beschädigt. Infolge dieser Beschädigung kann das beschädigte Ethernet-Paket 56 in dem Empfänger 53 nicht mehr gelesen bzw. verwertet werden und muss verworfen werden.

Der Ethernet-Standard bietet zwar die Möglichkeit, eine solche Beschädigung mit sehr hoher Wahrscheinlichkeit zu erkennen. Eine Wiederherstellung der Originaldaten ist jedoch nicht vorgesehen. Grundsätzlich ist zwar möglich, dass der Empfänger 53 im Falle des Empfangs eines beschädigten Ethernet-Pakets 56 bei dem Sender 52 das verloren gegangene oder defekte Ethernet-Paket 56 erneut anfordert. Dies kann beispielsweise über das TCP-Protokoll erreicht werden, deren Abarbeitung jedoch erst in nachgeordneten Bearbeitungsschichten des Empfängers erfolgt und nicht unmittelbar im Zusammenhang mit der Datenübertragung möglich ist. Außerdem ist eine Rückkommunikation von dem Empfänger 53 zu dem Sender 52 notwendig, bevor das Datenpaket erneut ausgesendet wird. Bei sicherheitskritischen Anwendungen, beispielsweise einem Bremsvorgang, kann ein solcher Kommunikationsprozess zur Herstellung einer Redundanz zu lange dauern, auch wenn Protokolle wie TCP oder IP anhand von Sequenznummern fehlende Datenpakete erkennen und neu anfordern können.

Außerdem kann erst der Empfänger das Fehlen eines Datenpakets erkennen und bei dem Sender erneut anfordern. Mögliche zur Weiterleitung der Ethernet-Pakete verwendete Zwischenknoten können dies nicht leisten, da diese nicht auf dieser Schicht arbeiten.

Vor diesem Hintergrund liegt die Aufgabe der vorliegenden Erfindung darin, eine Kommunikation nach dem Ethernet-Standard ausfallsicherer zu gestalten und eine redundante Kommunikation vorzusehen.

Diese Aufgabe wird durch ein Verfahren mit den Merkmalen des Anspruchs 1 und ein Steuergerät mit den Merkmalen des Anspruchs 8 gelöst. Weiterhin wird die erfindungsgemäß gestellte Aufgabe durch ein Computerprogrammprodukt mit Programmcodemitteln gelöst, die dazu geeignet sind, bei Ausführung auf einer Recheneinheit eines Steuergeräts die Recheneinheit zur Durchführung der entsprechenden Verfahrensschritte im Kommunikationsablauf mit anderen Steuergeräten einzurichten. Je nach Funktion des Steuergeräts können sämtliche der nachbeschriebenen Funktionen oder eine selektive Auswahl davon, durch das Computerprogrammprodukt in den Recheneinheiten der Steuergeräte eingerichtet werden.

Erfindungsgemäß wird vorgeschlagen, dass in den Kommunikationsinformationen des Ethernet-Frames mit den sicherheitsrelevanten Daten ein Datentyp für sicherheitsrelevante Daten übertragen wird. Ein solcher Datentyp kann in dem Ethernet-Standard prinzipiell neu definiert werden. Es ist erfindungsgemäß besonders bevorzugt jedoch möglich, als solchen Datentyp eine in dem Standard nicht definierte Kennung zu verwenden. Jeder Zwischenknoten, der für die Weiterleitung des Ethernet-Pakets zu dem Empfänger vorgesehen ist, überprüft in dem empfangenen Ethernet-Paket die Kommunikationsinformationen aus dem Dateninhalt des Ethernet-Frames auf das Vorhandensein dieses Datentyps für sicherheitsrelevante Daten. Sofern dieser Datentyp für sicherheitsrelevante Daten in den Kommunikationsinformationen des Ethernet-Frames enthalten ist, dupliziert jeder Zwischenknoten diesen Ethernet-Frame mindestens einmal vorzugsweise identisch und sendet den duplizierten Ethernet-Frame, bzw. jeden der duplizierten Ethernet-Frames, in einem neuen Ethernet-Paket aus. Dies bedeutet mit anderen Worten, dass zusätzlich zu dem empfangenen und weitergesendeten Ethernet-Paket mit dem ursprünglichen Ethernet-Frame mindestens ein neues Ethernet-Paket mit dem vorzugsweise identisch duplizierten Ethernet-Frame übertragen wird. Sollte eines der beiden Ethernet-Pakete mit den inhaltlich gleichen Ethernet-Frames auf dem Übertragungsweg verloren gehen oder beschädigt werden, kann der Empfänger die Information aus dem jeweils anderen (bzw. bei mehr als einer Duplizierung aus einem der anderen) Ethernet-Pakete gewinnen. Das Mitübertragen eines Datentyps ist so zu verstehen, dass in einem dafür verwendeten Datenfeld im Bereich der Kommunikationsinformationen des Ethernet-Frames eine Kennung des Datentyps übertragen wird. Hierdurch wird die beispielsweise für ein automatisiertes Fahren oder andere sicherheitskritische Anwendungen benötigte Redundanz erreicht.

Gemäß einer bevorzugten Weiterentwicklung des vorgeschlagenen Verfahrens kann jeder Zwischenknoten einen Ethernet-Frame, der diesen Datentyp für sicherheitsrelevante Daten in den Kommunikationsinformationen enthält, mehrfach (d. h. mehr als einmal) vorzugsweise identisch duplizieren und jeweils in einem neuen, eigenen Ethernet-Paket aussenden. Die Anzahl der duplizierten Ethernet-Frames kann vorzugsweise parametrierbar sein. Die Anzahl der duplizierten Ethernet-Frames kann beispielsweise durch verschiedene Datentypen für sicherheitsrelevante Daten und/oder durch mit dem Datentyp für sicherheitsrelevante Daten mit in den Kommunikationsinformationen enthaltenen Parametern vorgegeben werden. Dies kann insbesondere der Sender der Daten bei der Zusammenstellung des Ethernet-Frames vornehmen. Es ist aber auch denkbar, dass ein oder mehrere Steuergeräte die Quality of Service (QoS) der Übertragung, insbesondere eine aktuelle Paketverlustrate, in bekannter Weise überwachen und den Ethernet-Knoten, d. h. einem Steuergerät wie Sender, Empfänger und/oder Zwischenknoten, übermitteln. Damit können der Sender, ggf. aber auch einer der oder jeder Zwischenknoten in dem Übertragungsweg auf Grundlage der übermittelten QoS, insbesondere der übermittelten aktuellen Paketverlustrate, die Anzahl der duplizierten Ethernet-Frames vorgeben.

Ein erfindungsgemäß besonderer Vorteil der vorliegenden Erfindung liegt darin, dass der Ethernet-Standard um einen Ethernettyp, bzw. Datenpakettyp, erweitert wird, der eine besondere Behandlung für sicherheitsrelevante Daten vorsieht. Ein besonderer Aspekt der Erfindung ist, dass vorzugsweise der in dem IEEE-Standard definierte Frame, d. h. die Länge und Anordnung der einzelnen Datenfelder, nicht verändert wird. Stattdessen wird in einem oder mehreren Datenfeldern eine neue Kennung für den Datentyp, der sicherheitsrelevante Daten anzeigt, definiert. Die Definition kann derart ausgewählt werden, dass diese nicht mit Kennungen entsprechend dem IEEE-Standard kollidieren. Da diese Kommunikationsinformationen auf dem Übertragungsweg von jedem Ethernet-Knoten ausgewertet werden, kann zum einen die erfindungsgemäß vorgeschlagene Duplizierung der Datenpakete stattfinden. Zum anderen werden diese Daten von anderen Ethernet-Knoten ignoriert, weil sie nach dem IEEE-Standard unzulässige Kennungen aufweisen und als beschädigte Ethernet-Datenpakete verworfen werden. Somit ist das System kompatibel und kann auch in Netzwerken betrieben werden, die neben sicherheitsrelevanten Daten und diesen zugeordneten Steuergeräten auch andere Daten und Steuergeräte nach dem IEEE-Standard verarbeiten.

Entsprechend einer besonders bevorzugten Ausführungsform des vorgeschlagenen Verfahrens ist also vorgesehen, dass für die Übertragung des Datentyps für sicherheitsrelevante Daten in dem Ethernet-Standard vorhandene Datenfelder der Kommunikationsinformationen verwendet werden, indem diese mit nicht in dem Ethernet-Standard vergebenen Werten für den Datentyp für sicherheitsrelevante Daten belegt werden. So ist das vorgeschlagene Verfahren kompatibel mit dem IEEE 802.1 Ethernet-Standard, indem an der Übertragung zu beteiligende Netzwerkknoten (Steuergeräte) dazu eingerichtet werden, neben den durch den Ethernet-Standard definierten Werten für die Datenfelder (Kennungen) der Kommunikationsinformationen auch den zusätzlich zu dem Ethernet-Standard definierten Datentyp für sicherheitsrelevante Daten zu verstehen und entsprechend zu verarbeiten. Dazu nicht eingerichtete Netzwerkknoten verwerfen Datenpakete mit Werten in den Kommunikationsinformationen, die nicht dem zugrunde gelegten Ethernet-Standard entsprechend. So treten auch in einem herkömmlichen Ethernet-Netzwerk mit üblichen Steuergeräten keine Störungen auf.

Für die Implementierung des vorgeschlagenen Verfahrens muss gängige Hardware also nicht verändert werden. Vielmehr kann die bestehende Hardware weiterverwendet werden. Der neue Datentyp für sicherheitsrelevante Daten kann auch in ein bestehendes Netzwerk integriert werden, ohne dass vorhandene Geräte zu Schaden kommen, weil sie diesen Datentyp und damit Daten-Pakete dieses Datentyps nicht bemerken. Die notwendige Veränderung der Netzwerkknoten bzw. Steuergeräte kann individuell durch eine Software programmiert werden. Jedes entsprechend eingerichtete Steuergerät kann dann Pakete dieses Datentyps filtern und entsprechend dem vorgeschlagenen Verfahren reagieren. Durch die Nutzung von im Standard ohnehin definierten Datenfeldern in den Kommunikationsinformationen eines Ethernet-Frames wird der Ethernet-Standard durch Implementierung dieses Verfahrens nicht verletzt.

In diesem Zusammenhang wird als besonders bevorzugte Ausführungsform vorgeschlagen, als Datenfelder der Kommunikationsinformationen für die Übertragung des Datentyps für sicherheitsrelevante Daten die Datenfelder mit der Zieladresse, der Senderadresse und/oder den Ethertyp zu verwenden.

Die Zieladresse identifiziert den Ethernet-Knoten, der die Daten als Empfänger empfangen soll. Die Senderadresse identifiziert den Netzwerkknoten, der die Daten zusammengestellt hat und überträgt. Diese Adressen werden auch als MAC-Adressen bezeichnet und enthalten neben einer Kennung zur Klassifizierung eine weltweit eindeutige MAC-Adresse. Ferner ist eine lokale Administrierung erlaubt, welche einen Einsatz des erfindungsgemäß vorgeschlagenen Datentyps für sicherheitsrelevante Daten in räumlich begrenzten, lokalen Netzwerken wie dem Ethernet-Netzwerk in einem Automobil ermöglichen.

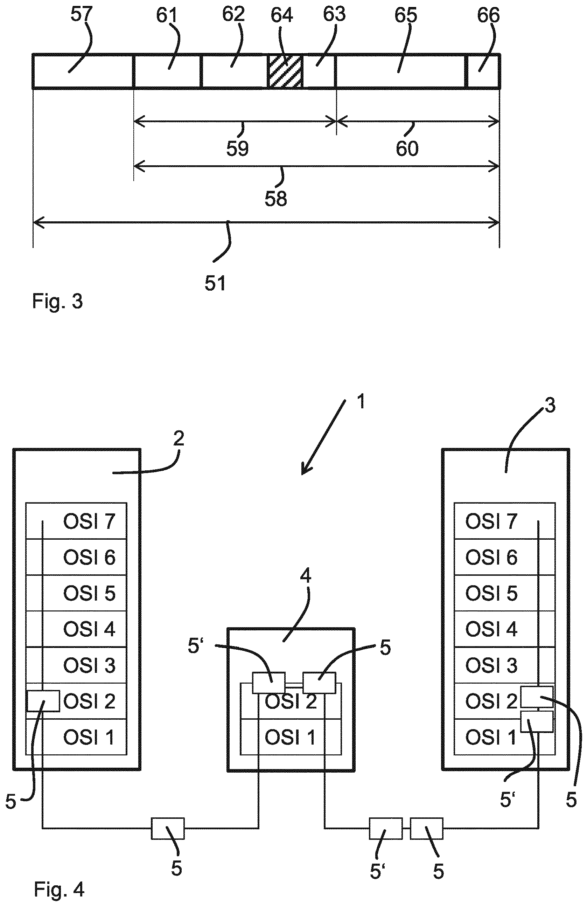

Der Ethernet Typ gibt Auskunft über das verwendete Protokoll der nächst höheren Verarbeitungsschicht entsprechend dem OSI-Schichtenmodell innerhalb der Nutzerdaten und dient der weiteren Verarbeitung der Daten aus den empfangenen Ethernet-Paketen in einem Steuergerät. Ein Ethernet Typ kann dersogenannte VLAN-Type sein, der dazu dient, ein logisches Netzwerk von dessen physikalischer Struktur zu trennen und die Möglichkeit gibt, in einem gemeinsamen physikalischen Netzwerk unterschiedliche logische Teilnetze zu definieren. Entsprechend dem IEEE 802.3 MAC tagged-Standard kann der VLAN-Type als eigenes Datenfeld neben dem Ethertyp bestehen. Dieser Aufbau eines typischen Ethernet-Pakets 51 ist in Fig. 3 schematisch dargestellt, wobei nicht sämtliche, sondern nur im Hinblick auf die Erfindung wesentliche Datenfelder konkreter erläutert werden. Das Ethernet-Paket 51 weist eine Präambel 57 und einen Ethernet-Frame 58 auf, der auf die Präambel 57 folgend in das Ethernet-Paket 51 eingebettet ist. Der Ethernet-Frame 58 enthält den eigentlichen Dateninhalt, welcher Kommunikationsinformationen 59 und Daten 60 aufweist. In den Kommunikationsinformationen 59 ist eine Zieladresse 61, eine Sendeadresse 62, ein Ethernet Typ 63 sowie optional (in dem Standard IEEE 802.3 MAC tagged) eine VLAN-Tag 64 enthalten. Die Daten 60 enthalten die inhaltlichen Informationen 65 sowie Kontrollfelder 66, wie beispielsweise eine Prüfsumme zur Überprüfung des Inhalts.

Die Verarbeitung der Ethernet-Pakete erfolgt in den Steuergeräten im Rahmen einer Stapelverarbeitung, die entsprechend dem OSI-Schichtenmodell aus sieben verschiedenen Schichten mit unterschiedlichen Aufgaben besteht, die in den einzelnen Steuergeräten entsprechend den Kommunikationsprotokollen nacheinander abgearbeitet werden.

Die untersten beiden Schichten OSI 1 und OSI 2 dienen dabei im Wesentlichen der physikalischen Kommunikation der in dem Netzwerk verbundenen Netzwerkknoten. Die unterste Schicht OSI 1 wird als Physical Layer oder Bitübertragungsschicht bezeichnet und dient dem Aktivieren und Deaktivieren der physikalischen Leitungen für die Übertragung. Hier wird also die Hardwaresteuerung für den Übertragungsweg realisiert. Die zweite Schicht OSI 2 wird als Data Link Layer oder Sicherungsschicht bezeichnet, die zum Organisieren einer möglichst fehlerfreien Übermittelung der einzelnen Datenpakete dient. Hier findet also eine Organisation des Kommunikationsablaufs statt. Diese beiden Schichten müssen im Rahmen einer Kommunikation von Steuerungsgeräten abgearbeitet werden, damit überhaupt eine Datenverbindung zustande kommt. Entsprechend spezifiziert der Ethernet-Standard IEEE 802.3, der im Rahmen der Erfindung vorzugsweise verwendet werden soll, nur die ersten beiden Schichten OSI 1 und OSI 2 des OSI-Modells.

Der Ethernet-Standard ist, mit der Einführung der Switching-Technologie, heute als eine Punkt-zu-Punkt-Verbindung realisiert und stellt anders als beispielsweise der CAN-Bus oder der FlexRay-Bus kein Bussystem dar. Wenn mehrere Ethernet-Knoten als Sende- und Empfängereinheiten miteinander kommunizieren sollen, sind daher Vermittlungskomponenten nötig, die im Rahmen dieser Offenbarung insbesondere als Zwischenknoten bezeichnet werden und technisch als sogenannte Switches realisiert sein können.

Im Rahmen der Kommunikation erhält jedes Ethernet-Paket 51 in seinen Kommunikationsinformationen 59 eine Zieladresse 61 und eine Sendeadresse 62, die zu Beginn des Ethernet-Frames gespeichert sind. Erhält ein Zwischenknoten 67, wie er in Fig. 2 entlang des Übertragungswegs 54 zwischen dem als Sender dienenden Steuergerät 52 und als Empfänger dienenden Steuergerät 53 angeordnet ist, ein in einem nicht dargestellten Ethernet-Paket 51 enthaltenen Ethernet-Frame 58, so überprüft der Zwischenknoten 67 in der zweiten Schicht OSI 2 die Zieladresse 61, die Senderadresse 62, den Ethernet Type 63 sowie, sofern vorgesehen, den VLAN-Tag 64 und leitet das Ethernet-Paket 51 mit dem Ethernet-Frame 58 dann anhand der Zieladresse 61 weiter. Diese Datenfelder befinden sich, wie in Fig. 3 dargestellt, am Anfang des Ethernet-Frames 58 und werden im Rahmen des Ethernet-Standards in der zweiten Schicht OSI 2 des Schichtmodells gelesen. Diese bilden die Kommunikationsinformationen 59.

Die Daten 60 dagegen werden entsprechend dem OSI-Modell erst in der zweiten Schicht OSI 2 nachfolgenden Schichten verarbeitet und entsprechend von dem Zwischenknoten 67 im Rahmen der Übertragung nach dem Ethernet-Standard nicht beachtet. Ein als Switch ausgebildeter Zwischenknoten (Steuergerät 67) kann also entsprechend dem Ethernet-Standard nicht auf diese Daten 60 zugreifen.

Aufgrund der Weiterleitung über einen, oder ggf. mehrere Zwischenknoten 67 gelangt das Ethernet-Paket 51 mit dem Ethernet-Frame 58 zu dem Empfänger 53, der anhand der Kommunikationsinformationen 59 in dem Ethernet-Frame 58 erkennt, dass er der Empfänger der Nachricht ist, und diese anschließend in den weiteren OSI-Schichten weiterverarbeitet.

Der Ethernet-Frame 58 und das Ethernet-Paket 51 werden entsprechend auch in dem Sender 52 in der ersten und zweiten Schicht OSI 2 des OSI-Modells Zusammengestellt.

Vor diesem Hintergrund wird als erfindungsgemäß besonders bevorzugte Ausführungsform vorgeschlagen, dass als Datenfelder der Kommunikationsinformationen für die Übertragung des (erfindungsgemäß als von dem Ethernet-Standard abweichenden Datentyp) für sicherheitsrelevante Daten die in dem Ethernet-Frame zuerst angeordneten Datenfelder verwendet werden. Dies sind die Datenfelder, die im Rahmen des OSI-Schichtenmodells für Kommunikationsprotokolle in der ersten und zweiten von insgesamt sieben Schichten im Rahmen der gesamten Kommunikationsorganisation gelesen und ausgewertet werden. Die ersten beiden Schichten OSI 1 und OSI 2 werden von jedem an der Übertragung des Ethernet-Pakets teilnehmenden Ethernet-Knoten, d. h. sowohl als Steuergeräte wie Sender und Empfänger, aber auch als Steuergeräte wie Zwischenknoten, gelesen und ausgewertet.

Gemäß einer bevorzugten Ausführungsform des vorgeschlagenen Verfahrens sendet der Zwischenknoten das Ethernet-Paket mit dem duplizierten Ethernet-Frame oder die mehreren Ethernet-Pakete mit jeweils dem duplizierten Ethernet-Frame in direkter Folge nach dem zuerst empfangenen Ethernet-Paket mit dem von dem Sender erzeugten, d. h. mit anderen Worten dem ursprünglichen, ersten, Ethernet-Frame aus. Hierdurch wird erreicht, dass bei einer Beschädigung eines dieser Ethernet-Pakete mit dem ursprünglichen oder einem der duplizierten Ethernet-Frames ein Ethernet-Paket mit demselben Dateninhalt (in einem duplizierten Ethernet-Frame) den Empfänger schnellstmöglich erreicht. Außerdem kann der Empfänger in diesem Fall das Eintreffen der mehreren, duplizierten Ethernet-Frames in aufeinanderfolgenden Ethernet-Paketen besonders einfach handhaben.

So kann gemäß einer bevorzugten Ausführungsform vorgesehen sein, dass der Empfänger des Ethernet-Pakets den korrekten Empfang des Ethernet-Pakets mit dem Ethernet-Frame überprüft und mögliche nachfolgend empfangene Ethernet-Pakete mit demselben Ethernet-Frame verwirft, wenn der Ethernet-Frame in den Kommunikationsinformationen den Datentyp für sicherheitsrelevante Daten aufweist. Aufgrund der zeitlich sehr nahen Folge der Ethernet-Pakete mit dem ursprünglichen Ethernet-Frame und den duplizierten Ethernet-Frames kann eine solche Kontrolle über den zeitlichen Empfang der verschiedenen Ethernet-Frames gesteuert werden, da jeweils aufeinanderfolgende Ethernet-Pakete besonders berücksichtigt werden können. Auch eine inhaltliche Überprüfung beispielsweise über eine Prüf summe (ggf. auch in den höheren OSI-Schichten) ist möglich, so dass die weiteren Datenpakete in den höheren OSI-Schichten verworfen werden können, wenn das erste Datenpaket fehlerfrei den Empfänger erreicht hat.

Entsprechend betrifft die Erfindung auch ein Steuergerät mit einer Kommunikationseinheit zur Übertragung sicherheitsrelevanter Daten in einem Kraftfahrzeug und mit einer Recheneinheit, wobei die Recheneinheit dazu eingerichtet ist, die Kommunikationseinheit zum Empfangen und/oder Senden der sicherheitsrelevanten Daten mittels eines Ethernet-Pakets entsprechend dem Ethernet-Standard in der ersten und zweiten Schicht des OSI-Schichtmodels, d. h. der Bitübertragungsschicht und der Sicherungsschicht, zu betreiben. Entsprechend dem Ethernet-Standard weist das Ethernet-Paket einen Ethernet-Frame mit dem Dateninhalt auf, welcher Kommunikationsinformationen und Daten enthält. Im Rahmen der Umsetzung des zuvor beschriebenen erfindungsgemäßen Verfahrens ist es in jedem Fall notwendig, dass die Recheneinheit eines jeden Steuergerätes, welches an einer Kommunikation nach dem erfindungsgemäß vorgeschlagenen Verfahren teilnehmen soll, weiter dazu eingerichtet ist, nach dem Empfang eines Ethernet-Pakets die Kommunikationsinformationen aus dem Dateninhalt des Ethernet-Frames auf das Vorhandensein des vorgeschlagenen Datentyps für sicherheitsrelevante Daten zu überprüfen. Dies gilt sowohl für den eigentlichen Empfänger der Daten als auch für einen als Zwischenknoten arbeitenden Switch.

Da Steuergeräte in der Regel eine bidirektionale Kommunikation vorsehen, ist dies auch für als Sender arbeitende Steuergeräte sinnvoll, um eine bidirektionale Kommunikation zu ermöglichen. Insbesondere im Falle eines als Zwischenknoten agierenden Steuergeräts kann die Recheneinheit weiter dazu eingerichtet sein, einen Ethernet-Frame, der den Datentyp für sicherheitsrelevante Daten in den Kommunikationsinformationen enthält, mindestens einmal vorzugsweise identisch zu duplizieren und den duplizierten Ethernet-Frame (oder jeden der duplizierten Ethernet-Frames) in einem neuen Ethernet-Paket, d. h. zusätzlich zu dem empfangenen und weitergesendeten Ethernet-Paket, auszusenden. Hierdurch wird die bereits beschriebene Redundanz erreicht.

Als Vorteil aus der Duplizierung ergibt sich zum einen, dass ein Paketverlust eines Ethernet-Frames hinnehmbar ist. Weiterhin kann die Verfälschung eines Ethernet-Frames und das Verwerfen durch den hinterherkommenden Ethernet-Frame ausgeglichen werden, ohne dass eine explizite Neuanforderung eines solchen Ethernet-Frames nötig ist. Dies spart sehr viel Zeit, die ansonsten für die Neuanforderung und Versendung benötigt würde.

Da in einem Kraftfahrzeug möglichst jedes Steuergerät so ausgebildet sein sollte, dass es auch als Zwischenknoten in einem konkreten Übertragungsweg arbeiten kann, ist es sinnvoll, in jedem der Steuergeräte die zuvor beschriebene Funktionalität zu implementieren.

Ferner kann in dem Steuergerät, insbesondere wenn es als Empfänger der sicherheitsrelevanten Daten fungieren kann, die Recheneinheit weiter dazu eingerichtet sein, den korrekten Empfang eines Ethernet-Pakets mit dem Ethernet-Frame zu überprüfen und mögliche nachfolgend empfangene Ethernet-Pakete mit demselben Ethernet-Frame (ohne eine weitergehende Prüfung) zu verwerfen, wenn der Ethernet-Frame in den Kommunikationsinformationen den Datentyp für sicherheitsrelevante Daten aufweist. Hierdurch wird eine Mehrarbeit bei der Auswertung der Ethernet-Frames durch den Empfänger vermieden.

Bei einem als Sender fungierenden Steuergerät kann die Recheneinheit ferner weiter dazu eingerichtet sein, in den Kommunikationsinformationen eines Ethernet-Frames von sicherheitsrelevanten Daten einen Datentyp für sicherheitsrelevante Daten mit zu übertragen, der vorzugsweise durch eine in dem Ethernet-Standard nicht definierte Kennung gebildet ist, ggf. aber auch als Kennung neu in den Ethernet-Standard aufgenommen werden kann.

Da vorzugsweise jedes Steuergerät in dem Kommunikationsnetz des Kraftfahrzeugs nach dem Ethernet-Standard als Sender, Empfänger oder Zwischenknoten verwendet werden kann, um möglichst viele verschiedene physikalische Übertragungswege zu erreichen, ist es sinnvoll, sämtliche der vorbeschriebenen Funktionen in jedem Steuergerät zu implementieren. Zumindest kann die Recheneinheit jedes Steuergeräts zumindest mit dem in Bezug auf das Steuergerät beschriebenen Teilen des Verfahrens eingerichtet werden, die erforderlich sind, um in der Kommunikation mit anderen entsprechend beschriebenen Steuergeräten das Verfahren auszuführen. Es ist auch möglich, die Recheneinheit des Steuergeräts so einzurichten, dass die Kommunikationseinheit des Steuergeräts zur Ausführung aller Verfahrensschritte eingerichtet ist und so in einer Kommunikation mit anderen Steuergeräten jede Funktion, d. h. die Funktion des Senders, Empfängers und/oder Zwischenknotens, ausführen könnte.

Die Einrichtung der Recheneinheit der vorbeschriebenen Steuergeräte kann mittels eines Computerprogrammprodukts erfolgen.

Weitere Vorteile, Merkmale und Anwendungsmöglichkeiten der vorliegenden Erfindung ergeben sich auch aus der nachfolgenden Beschreibung eines Ausführungsbeispiels und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: schematisch die Übertragung eines Ethernet-Pakets zwischen einem Sender und einem Empfänger gemäß dem Stand der Technik;
- Fig. 2: schematisch die typische Weiterleitung eines Ethernet-Frames in den Recheneinheiten der Steuergeräte im Rahmen des OSI-Schichtmodells entsprechend dem Stand der Technik;
- Fig. 3: den Aufbau eines Ethernet-Pakets gemäß dem Stand der Technik;
- Fig. 4: die Verarbeitung eines Ethernet-Frames mit einer erfindungsgemäß vorgeschlagenen Kennung eines Datentyps für sicherheitsrelevante Daten entlang des Übertragungswegs gemäß einer bevorzugten Ausführungsform der vorliegenden Erfindung;
- Fig. 5: einen Ausschnitt eines Ethernet-Frames mit dem erfindungsgemäß vorgeschlagenen Datentyp in unterschiedlichen Datenfeldern gemäß verschiedenen Varianten der vorliegenden Erfindung.
- Fig. 6: ein konkretes Ausführungsbeispiel für Kommunikationsdaten eines Ethernet-Frames entsprechend den vorbeschriebenen Beispielen.

In den Fig. 1 bis 3 wird der bekannte Ethernet-Standard im Hinblick auf die Struktur der Ethernet-Pakete und dem Ablauf entlang eines Kommunikationsweges dargestellt, wobei die im Hinblick auf die vorliegende Erfindung wesentlichen Merkmale gezeigt werden. Diese Figuren wurden zur Erläuterung vorstehend bereits ausführlich beschrieben. Auf diese Beschreibung wird an dieser Stelle verwiesen.

Fig. 4 zeigt ein Übertragungssystem 1 nach dem Ethernet-Standard, welches nach dem vorgeschlagenen Verfahren zur Übertragung von sicherheitsrelevanten Daten eingerichtet ist.

Ähnlich zu der Darstellung gemäß Fig. 2 weist auch das Übertragungssystem 1 ein als Sender dienendes Steuergerät 2, ein als Empfänger dienendes Steuergerät 3 und ein als Zwischenknoten dienendes Steuergerät 4 auf. Sämtliche Steuergeräte 2, 3, 4 arbeiten das Kommunikationsprotokoll nach dem OSI-Modell ab, wobei der Ethernet-Standard nur in den ersten beiden Schichten OSI 1 und OSI 2 des Schichtenmodells realisiert ist. Entsprechend erzeugt der Sender 2 in der Schicht OSI 2 einen Ethernet-Frame 5, der von der Struktur her dem in Fig. 3 dargestellten Ethernet-Frame 58 entspricht und eingebettet in ein nicht dargestelltes Ethernet-Paket ausgesendet wird.

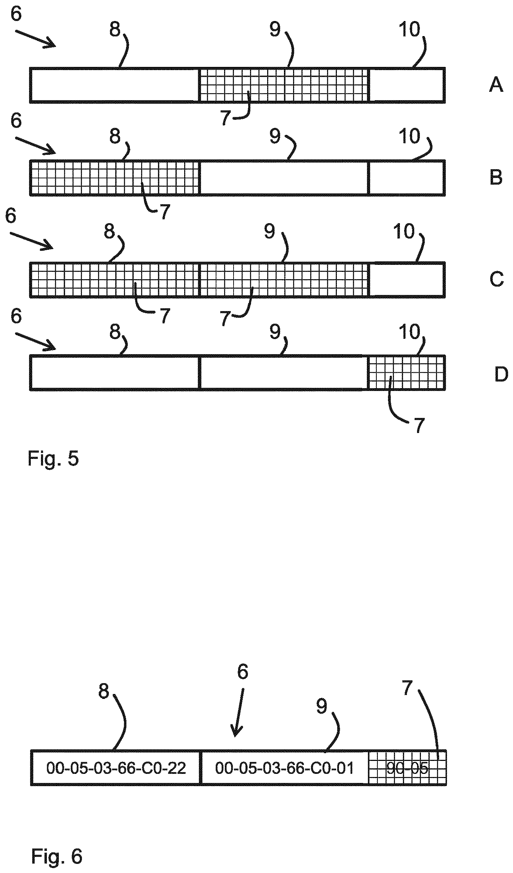

Dieses Ethernet-Paket mit dem Ethernet-Frame 5 enthält in den Kommunikationsinformationen des Ethernet-Frames 5, wie sie in Fig. 5 und 6 schematisch dargestellt sind, den Datentyp 7 (in der Darstellung gemäß Fig. 5 und 6 kariert dargestellt), der durch den Sender 2 in den Ethernet-Frame 5 eingestellt wurde. Der Zwischenknoten 4 liest die Kommunikationsinformationen 6 des Ethernet-Frames 5 nach dem Empfang und filtert nach dem Datentyp 7.

Sofern ein solcher Datentyp 7 für sicherheitsrelevante Daten in dem Ethernet-Frame 5 vorhanden ist, dupliziert die Recheneinheit des Zwischenknotens 4 den Ethernet-Frame zu einem duplizierten Ethernet-Frame 5' mit identischem Dateninhalt. Beide Ethernet-Frames 5, 5' werden in vorzugsweise unmittelbar aufeinanderfolgenden, in der Darstellung gemäß Fig. 4 nicht dargestellten Ethernet-Paketen in Richtung des Empfängers 6 ausgebildet, wobei vorzugsweise der duplizierte Ethernet-Frame 5' nach dem ursprünglichen Ethernet-Frame 5 ausgesendet wird. Vorzugsweise soll durch den Zwischenknoten 4 zwischen dem Ethernet-Datenpaket mit dem Ethernet-Frame 5 und dem Ethernet-Paket mit den duplizierten Ethernet-Frame 5' kein anderes Ethernet-Paket zwischengesendet werden.

In der Darstellung gemäß Fig. 4 ist nur ein duplizierter Ethernet-Frame 5' dargestellt. Erfindungsgemäß kann jedoch eine einfache oder mehrfache Duplizierung erfolgen.

Entsprechend empfängt der Empfänger 3 zwei Ethernet-Datenpakete, nämlich das erste Ethernet-Datenpaket mit dem Ethernet-Frame 5 und das zweite Ethernet-Datenpaket mit dem duplizierten Ethernet-Frame 5'. Der Empfänger 3 prüft, ob bei Eingehen eines Daten-Paketes in den Ethernet-Frames 5, 5' der Datentyp 7 für sicherheitsrelevante Daten vorhanden ist. Ist dies der Fall, kann der Empfänger 3 davon ausgehen, dass diesem Ethernet-Frame 5 eine Kopie als duplizierter Ethernet-Frame 5' folgen wird. Sollte bereits der ursprüngliche, zuerst empfangene Ethernet-Frame 5 ordnungsgemäß und fehlerfrei empfangen sein, verwirft der Empfänger 3 die nachfolgende Kopie des duplizierten Ethernet-Frames 5'. Sollte dagegen bei der Übertragung ein Fehler in dem Datenpaket des ursprünglichen Ethernet-Frames 5 aufgetreten sein, kann der Empfänger 3 die in sehr kurzem Zeitabstand nachfolgend übersandte Kopie des duplizierten Ethernet-Frames 5' verwenden. Hierdurch wird de facto eine hohe Redundanz geschaffen, weil eine ausführliche Rückfrage des Empfängers 3 bei dem Sender 2 nicht notwendig ist.

Fig. 5 zeigt die Kommunikationsinformationen 6 eines Ethernet-Frames 5 gemäß einer bevorzugten Ausführungsform. Die Kommunikationsinformationen 6 enthalten jeweils die Zieladresse 8, die Senderadresse 9 und den Ethernet Type 10. Die in Fig. 5 dargestellten Varianten A, B, C und D der Kommunikationsinformationen 6 unterscheiden sich dadurch, dass der Datentyp 7 für sicherheitsrelevante Daten als Kennung in den unterschiedlichen Datenfeldern Zieladresse 8, Senderadresse 9 bzw. Ethertyp 10 vorgesehen ist. Die Variante A zeigt den Datentyp 7 in der Senderadresse 9, die Variante B in der Zieladresse 8, die Variante C kombiniert in der Zieladresse 8 und der Senderadresse 9 und die Variante D in dem Ethertyp 10.

Fig. 6 zeigt die Variante D aus Fig. 5 in einem konkreten Zahlenbeispiel. Dabei sind bestimmte Werte der einzelnen Datenfelder Zieladresse 8, Senderadresse 9 und Ethertyp 10 sowie ggf. VLAN-Tag (in Fig. 5 und 6 nicht dargestellt) entsprechend dem Ethernet-Standard reserviert. Solche reservierten Zieladressen 8 und Senderadressen 9 sind in der Darstellung als sogenannte MAC-Adressen in Fig. 6 beispielhaft eingetragen.

Der Ethertyp 10 weist die hexadezimale Zahlenfolge 90-05 auf, die entsprechend dem Ethernet- Standard nicht vergeben ist. Die Steuergeräte 2, 3, 4, die in dem Übertragungssystem 1 nach dem Ethernet-Standard an der Übertragung sicherheitsrelevanter Informationen teilnehmen, können in dem in Fig. 6 dargestellten Beispiel also in dem Datenfeld des Ethertyp 10 nach der dezimalen Zahl "09-05" filtern, um die Redundanzfunktion entsprechend dem erfindungsgemäß vorgeschlagenen Verfahren zu aktivieren und eine Duplizierung der Ethernet-Frames 5 zu einem oder mehreren duplizierten Ethernet-Frames 5' zu aktivieren, die als vorzugsweise unmittelbar aufeinander folgende Ethernet-Pakete dem Empfänger 3 zugeleitet werden.

## Patentansprüche

1. Verfahren zur Übertragung sicherheitsrelevanter Daten in einem Kraftfahrzeug mittels eines Ethernet-Standards von einem Sender (2) über mindestens einen Zwischenknoten (4) zu einem Empfänger (3), bei dem
- die sicherheitsrelevanten Daten von dem Sender (2) in einem Ethernet-Paket versendet werden, wobei das Ethernet-Paket einen Ethernet-Frame (5) mit dem Dateninhalt aufweist und der Dateninhalt Kommunikationsinformationen (6) und Daten enthält,
- jeder Zwischenknoten (4), der ein Ethernet-Paket empfängt, zumindest einen Teil der Kommunikationsinformationen (6) aus dem Dateninhalt auswertet, die in einer ersten oder zweiten Schicht des OSI Schichtenmodells im Rahmen der Kommunikationsorganisation verwendet werden, und das Ethernet-Paket entsprechend den ausgewerteten Kommunikationsinformationen (6) weitersendet, und
- der Empfänger (3) das Ethernet-Paket empfängt, die Kommunikationsinformationen (6) aus dem Dateninhalt auswertet und die Daten aus dem Dateninhalt auswertet, wenn er aufgrund der ausgewerteten Kommunikationsinformationen (6) der Empfänger (3) der sicherheitsrelevanten Daten ist,
wobei
- in den in der ersten oder zweiten Schicht des OSI-Schichtenmodells verwendeten Kommunikationsinformationen (6) des Ethernet-Frames (5) mit den sicherheitsrelevanten Daten ein Datentyp (7) für sicherheitsrelevante Daten übertragen wird,
- jeder Zwischenknoten (4) in dem empfangenen Ethernet-Paket die in der ersten oder zweiten Schicht des OSI-Schichtenmodells verwendeten Kommunikationsinformationen (6) aus dem Dateninhalt des Ethernet-Frames (5) auf das Vorhandensein des Datentyps (7) für sicherheitsrelevante Daten überprüft,
- jeder Zwischenknoten (4) einen Ethernet-Frame (5), der den Datentyp (7) für sicherheitsrelevante Daten in den in der ersten oder zweiten Schicht des OSI-Schichtenmodells verwendeten Kommunikationsinformationen (6) enthält, mindestens einmal dupliziert und
- jeder Zwischenknoten den duplizierten Ethernet-Frame (5') in einem neuen Ethernet-Paket aussendet; **dadurch gekennzeichnet, dass** jeder Zwischenknoten (4) das Ethernet-Paket mit dem duplizierten Ethernet-Frame (5') oder die mehreren Ethernet-Pakete mit jeweils dem duplizierten Ethernet-Frame (5') in direkter Folge nach dem zuerst empfangenen Ethernet-Paket mit dem von dem Sender erzeugten Ethernet-Frame (5) aussendet.

2. Verfahren nach Anspruch 1, **dadurch gekennzeichnet, dass** jeder Zwischenknoten (4) einen Ethernet-Frame (5), der den Datentyp (7) für sicherheitsrelevante Daten in den Kommunikationsinformationen enthält, mehrfach dupliziert und jeweils in einem neuen eigenen Ethernet-Paket aussendet, wobei die Anzahl der duplizierten Ethernet-Frames (5') parametrierbar ist.

3. Verfahren nach Anspruch 1 oder 2, **dadurch gekennzeichnet, dass** für die Übertragung des Datentyps (7) für sicherheitsrelevante Daten in dem Ethernet-Standard vorhandene Datenfelder (8, 9, 10) der in der ersten oder zweiten Schicht des OSI-Schichtenmodells verwendeten Kommunikationsinformationen (6) verwendet werden, indem diese mit einem nicht in dem Ethernet-Standard vergebenen Wert für den Datentyp (7) für sicherheitsrelevante Daten belegt werden.

4. Verfahren nach Anspruch 3, **dadurch gekennzeichnet, dass** als Datenfelder der in der ersten oder zweiten Schicht des OSI-Schichtenmodells verwendeten Kommunikationsinformationen (6) für die Übertragung des Datentyps (7) für sicherheitsrelevante Daten die Datenfelder mit der Zieladresse (8), der Senderadresse (9), für den Ethertyp (10) und/oder die VLAN-Flag genutzt werden.

5. Verfahren nach Anspruch 3 oder 4, **dadurch gekennzeichnet, dass** als Datenfelder der in der ersten oder zweiten Schicht des OSI-Schichtenmodells verwendeten Kommunikationsinformationen (6) für die Übertragung des Datentyps (7) für sicherheitsrelevante Daten die in dem Ethernet-Frame (5, 5') zuerst angeordneten Datenfelder verwendet werden.

6. Verfahren nach einem der vorhergehenden Ansprüche,
**dadurch gekennzeichnet, dass** der Empfänger (3) des Ethernet-Pakets den korrekten Empfang des Ethernet-Pakets mit dem Ethernet-Frame (5) überprüft und, bei korrektem Empfang, mögliche nachfolgend empfangene Ethernet-Pakete mit demselben Ethernet-Frame (5, 5') verwirft, wenn der Ethernet-Frame (5, 5') in den in der ersten oder zweiten Schicht des OSI-Schichtenmodells verwendeten Kommunikationsinformationen (6) den Datentyp (7) für sicherheitsrelevante Daten aufweist.

7. Steuergerät mit einer Kommunikationseinheit zur Übertragung sicherheitsrelevanter Daten in einem Kraftfahrzeug und mit einer Recheneinheit, wobei die Recheneinheit dazu eingerichtet ist, die Kommunikationseinheit zum Empfangen und/oder Senden der sicherheitsrelevanten Daten mittels eines Ethernet-Pakets entsprechend dem Ethernet-Standard in der ersten und zweiten Schicht des OSI-Schichtenmodells zu betreiben, wobei das Ethernet-Paket einen Ethernet-Frame (5) mit dem Dateninhalt aufweist, welcher Kommunikationsinformationen (6) und Daten enthält, **dadurch gekennzeichnet, dass** die Recheneinheit dazu eingerichtet ist, nach dem Empfang eines Ethernet-Pakets zumindest einen Teil der Kommunikationsinformationen (6) aus dem Dateninhalt des Ethernet-Frames (5) auszuwerten, die in einer ersten und einer zweiten Schicht des OSI-Schichtenmodells im Rahmen der Kommunikationsorganisation verwendet werden, und auf das Vorhandensein des Datentyps (7) für sicherheitsrelevante Daten zu überprüfen,
**dadurch gekennzeichnet, dass** die Recheneinheit dazu eingerichtet ist, einen Ethernet-Frame (5), der den Datentyp (7) für sicherheitsrelevante Daten in den in der ersten oder zweiten Schicht des OSI-Schichtenmodells verwendeten Kommunikationsinformationen (6) enthält, mindestens einmal zu duplizieren und den duplizierten Ethernet-Frame (5') in einem neuen Ethernet-Paket auszusenden und in direkter Folge nach dem zuerst empfangenen Ethernet-Paket mit dem von dem Sender erzeugten Ethernet-Frame (5) auszusenden.

8. Steuergerät nach Anspruch 7, **dadurch gekennzeichnet, dass** die Recheneinheit dazu eingerichtet ist, den korrekten Empfang eines Ethernet-Pakets mit dem Ethernet-Frame (5, 5') zu überprüfen und, bei korrektem Empfang, mögliche nachfolgend empfangene Ethernet-Pakete mit demselben Ethernet-Frame (5, 5') zu verwerfen, wenn der Ethernet-Frame (5, 5') in den in der ersten oder zweiten Schicht des OSI-Schichtenmodells verwendeten Kommunikationsinformationen (6) den Datentyp (7) für sicherheitsrelevante Daten aufweist.

9. Steuergerät nach einem der Ansprüche 7 bis 8,
**dadurch gekennzeichnet, dass** die Recheneinheit dazu eingerichtet ist, in den in der ersten oder zweiten Schicht des OSI-Schichtenmodells verwendeten Kommunikationsinformationen (6) eines Ethernet-Frames (5, 5') von sicherheitsrelevanten Daten einen Datentyp (7) für sicherheitsrelevante Daten mit zu übertragen.

10. Computerprogrammprodukt mit Programmcodemitteln, die dazu geeignet sind, bei Ausführung auf einer Recheneinheit eines Steuergeräts nach einem der Ansprüche 7 bis 9 die Recheneinheit zur Durchführung der entsprechenden Verfahrensschritte einzurichten.

## Claims

1. Method for transmitting safety-relevant data in a motor vehicle by means of an Ethernet standard from a transmitter (2) via at least one intermediate node (4) to a receiver (3), in which
- the safety-relevant data are sent from the transmitter (2) in an Ethernet packet, the Ethernet packet having an Ethernet frame (5) with the data content and the data content containing communication information (6) and data,
- each intermediate node (4) which receives an Ethernet packet evaluates at least a part of the communication information (6) from the data content which is used in a first or second layer of the OSI layer model in the context of the communication organization and forwards the Ethernet packet in accordance with the evaluated communication information (6), and
- the receiver (3) receives the Ethernet packet, evaluates the communication information (6) from the data content and evaluates the data from the data content if, on the basis of the evaluated communication information (6), it is the receiver (3) of the safety-relevant data,
wherein
- in the communication information (6), used in the first or second layer of the OSI layer model, of the Ethernet frame (5) a data type (7) for safety-relevant data is transmitted with the safety-relevant data,
- each intermediate node (4) checks in the received Ethernet packet the communication information (6) used in the first or second layer of the OSI layer model from the data content of the Ethernet frame (5) for the presence of the data type (7) for safety-relevant data,
- each intermediate node (4) duplicates an Ethernet frame (5), which contains the data type (7) for safety-relevant data in the communication information (6) used in the first or second layer of the OSI layer model, at least once, and
- each intermediate node sends out the duplicated Ethernet frame (5') in a new Ethernet packet; **characterized in that** each intermediate node (4) sends out the Ethernet packet with the duplicated Ethernet frame (5') or the several Ethernet packets with in each case the duplicated Ethernet frame (5') in direct sequence after the Ethernet packet received first with the Ethernet frame (5) generated by the transmitter.

2. Method according to Claim 1, **characterized in that** each intermediate node (4) duplicates an Ethernet frame (5), which contains the data type (7) for safety-relevant data in the communication information, several times and sends it out in each case in a new separate Ethernet packet, the number of duplicated Ethernet frames (5') being parameterizable.

3. Method according to Claim 1 or 2, **characterized in that** data fields (8, 9, 10), present in the Ethernet standard, of the communication information (6) used in the first or second layer of the OSI layer model are used for the transmission or the data type (7) for safety-relevant data, **in that** these are occupied with a value, not issued in the Ethernet standard, for the data type (7) for safety-relevant data.

4. Method according to Claim 3, **characterized in that** the data fields having the destination address (8), the transmitter address (9) are utilized for the Ethernet type (10) and/or the VLAN flag as data fields of the communication information (6) used in the first or second layer of the OSI layer model for the transmission of the data type (7) for safety-relevant data.

5. Method according to Claim 3 or 4, **characterized in that** the data fields arranged first in the Ethernet frame (5, 5') are used as data fields of the communication information (6) used in the first or second layer of the OSI layer model for the transmission of the data type (7) for safety-relevant data.

6. Method according to one of the preceding claims, **characterized in that** the receiver (3) of the Ethernet packet checks the correct reception of the Ethernet packet having the Ethernet frame (5) and, in the case of a correct reception, discards possible subsequently received Ethernet packets having the same Ethernet frame (5, 5') when the Ethernet frame (5, 5') in the communication information (6) used in the first or second layer of the OSI layer model has the data type (7) for safety-relevant data.

7. Control device having a communication unit for transmitting safety-relevant data in a motor vehicle and having a computing unit, the computing unit being configured to operate the communication unit for receiving and/or transmitting the safety-relevant data by means of an Ethernet packet in accordance with the Ethernet standard in the first and second layer of the OSI layer model, the Ethernet packet having an Ethernet frame (5) with the data content which contains communication information (6) and data, **characterized in that** the computing unit is configured to evaluate after the reception of an Ethernet packet at least a part of the communication information (6) from the data content of the Ethernet frame (5) which is used in a first and a second layer of the OSI layer model as part of the communication organization and to check it for the presence of the data type (7) for safety-relevant data,
**characterized in that** the computing unit is configured to duplicate an Ethernet frame (5), which contains the data type (7) for safety-relevant data in the communication information (6) used in the first or second layer of the OSI layer model, at least once and to send out the duplicated Ethernet frame (5') in a new Ethernet packet and in direct sequence after the Ethernet packet received first with the Ethernet frame (5) generated by the transmitter.

8. Control device according to Claim 7, **characterized in that** the computing unit is configured to check the correct reception of an Ethernet packet having the Ethernet frame (5, 5') and, in the case of a correct reception, to discard possible subsequently received Ethernet packets having the same Ethernet frame (5, 5') when the Ethernet frame (5, 5') in the communication information (6) used in the first or second layer of the OSI layer model has the data type (7) for safety-relevant data.

9. Control device according to one of Claims 7 to 8, **characterized in that** the computing unit is configured to transmit in the communication information (6) used in the first or second layer of the OSI layer model of an Ethernet frame (5, 5') of safety-relevant data also a data type (7) for safety-relevant data.

10. Computer program product having program code means which are suitable for configuring, when executed on a computing unit of a control device according to one of Claims 7 to 9, the computing unit for carrying out the corresponding method steps.

## Revendications

1. Procédé destiné à la transmission de données relatives à la sécurité dans un véhicule automobile au moyen d'une norme Ethernet d'un émetteur (2) à un récepteur (3) par l'intermédiaire d'au moins un noeud intermédiaire (4), dans lequel
- les données relatives à la sécurité sont envoyées par l'émetteur (2) dans un paquet Ethernet, le paquet Ethernet comportant une trame Ethernet (5) pourvue du contenu de données et le contenu de données contenant des informations de communication (6) et des données,
- chaque noeud intermédiaire (4) recevant un paquet Ethernet évalue au moins une partie des informations de communication (6) provenant du contenu de données et utilisées dans une première ou une deuxième couche du modèle de couche OSI dans le cadre de l'organisation de communication et retransmet le paquet Ethernet en fonction des informations de communication (6) évaluées, et
- le récepteur (3) reçoit le paquet Ethernet, évalue les informations de communication (6) provenant du contenu de données et évalue les données provenant du contenu de données lorsque, sur la base des informations de communication (6) évaluées, il est le récepteur (3) des données relatives à la sécurité,
dans lequel
- un type de données (7) pour des données relatives à la sécurité est transmis avec les données relatives à la sécurité dans les informations de communication (6) de la trame Ethernet (5), qui sont utilisées dans la première ou la deuxième couche du modèle de couche OSI,
- chaque noeud intermédiaire (4) vérifie, dans le paquet Ethernet reçu, les informations de communication (6) utilisées dans la première ou la deuxième couche du modèle de couche OSI provenant du contenu de données de la trame Ethernet (5) pour rechercher la présence du type de données (7) pour des données relatives à la sécurité,
- chaque noeud intermédiaire (4) duplique au moins une fois une trame Ethernet (5), qui contient le type de données (7) pour des données relatives à la sécurité dans les informations de communication (6) utilisées dans la première ou la deuxième couche du modèle de couche OSI, et
- chaque noeud intermédiaire envoie la trame Ethernet dupliquée (5') dans un nouveau paquet Ethernet ;
**caractérisé en ce que** chaque noeud intermédiaire (4) transmet le paquet Ethernet comportant la trame Ethernet dupliquée (5') ou les multiples paquets Ethernet comportant chacun la trame Ethernet dupliquée (5') en séquence directe après le paquet Ethernet reçu en premier lieu et comportant la trame Ethernet (5) générée par l'émetteur.

2. Procédé selon la revendication 1, **caractérisé en ce que** chaque noeud intermédiaire (4) duplique plusieurs fois une trame Ethernet (5) qui contient le type de données (7) pour des données relatives à la sécurité dans les informations de communication et les transmet respectivement dans un nouveau paquet Ethernet séparé, dans lequel le nombre des trames Ethernet dupliquées (5') peut être paramétré.

3. Procédé selon la revendication 1 ou 2, **caractérisé en ce que** des champs de données (8, 9, 10), conformes à la norme Ethernet, des informations de communication (6) utilisées dans la première ou la deuxième couche du modèle de couche OSI sont utilisés pour la transmission du type de données (7) pour des données relatives à la sécurité, en leur attribuant une valeur non définie dans la norme Ethernet pour le type de données (7) pour des données relatives à la sécurité.

4. Procédé selon la revendication 3, **caractérisé en ce que** les champs de données comportant l'adresse de destination (8), l'adresse d'expéditeur (9), sont utilisés pour le type Ethernet (10) et/ou le drapeau VLAN en tant que champs de données des informations de communication (6) utilisées dans la première ou la deuxième couche du modèle de couche OSI pour la transmission du type de données (7) pour des données relatives à la sécurité.

5. Procédé selon la revendication 3 ou 4, **caractérisé en ce que** les champs de données disposés en premier lieu dans la trame Ethernet (5, 5') sont utilisés en tant que champs de données des informations de communication (6) utilisées dans la première ou la deuxième couche du modèle de couche OSI pour la transmission du type de données (7) pour des données relatives à la sécurité.

6. Procédé selon l'une des revendications précédentes, **caractérisé en ce que** le récepteur (3) du paquet Ethernet vérifie la réception correcte du paquet Ethernet comportant la trame Ethernet (5) et, en cas de réception correcte, rejette les paquets Ethernet éventuellement reçus ultérieurement et comportant la même trame Ethernet (5, 5') si la trame Ethernet (5, 5') présente le type de données (7) pour des données relatives à la sécurité dans les informations de communication (6) utilisées dans la première ou la deuxième couche du modèle de couche OSI.

7. Dispositif de commande comportant une unité de communication pour la transmission de données relatives à la sécurité dans un véhicule automobile et une unité de calcul, dans lequel l'unité de calcul est conçue pour faire fonctionner l'unité de communication afin qu'elle reçoive et/ou transmette les données relatives à la sécurité par l'intermédiaire d'un paquet Ethernet conforme à la norme Ethernet dans les première et deuxième couches du modèle de couche OSI, dans lequel le paquet Ethernet comporte une trame Ethernet (5) pourvue du contenu de données, qui contient des informations de communication (6) et des données, **caractérisé en ce que**, après réception d'un paquet Ethernet, l'unité de calcul est conçue pour évaluer au moins une partie des informations de communication (6), provenant du contenu de données de la trame Ethernet (5), qui sont utilisées dans une première et une deuxième couche du modèle de couche OSI dans le cadre de l'organisation de communication, et pour vérifier la présence du type de données (7) pour des données relatives à la sécurité, **caractérisé en ce que** l'unité de calcul est conçue pour dupliquer au moins une fois une trame Ethernet (5), qui contient le type de données (7) pour des données relatives à la sécurité dans les informations de communication (6) utilisées dans la première ou la deuxième couche du modèle de couche OSI et pour transmettre la trame Ethernet dupliquée (5') dans un nouveau paquet Ethernet et pour la transmettre en séquence directe après le paquet Ethernet reçu en premier lieu et comportant la trame Ethernet (5) générée par l'émetteur.

8. Dispositif de commande selon la revendication 7, **caractérisé en ce que** l'unité de calcul est conçue pour vérifier la réception correcte d'un paquet Ethernet comportant la trame Ethernet (5, 5') et, en cas de réception correcte, pour rejeter d'éventuels paquets Ethernet reçus ultérieurement et comportant la même trame Ethernet (5, 5'), lorsque la trame Ethernet (5, 5') comporte le type de données (7) pour des données relatives à la sécurité dans les informations de communication (6) utilisées dans la première ou la deuxième couche du modèle de couche OSI.

9. Dispositif de commande selon l'une des revendications 7 à 8, **caractérisé en ce que** l'unité de calcul est conçue pour transmettre un type de données (7) pour des données relatives à la sécurité dans les informations de communication (6) utilisées dans la première ou la deuxième couche du modèle de couche OSI, d'une trame Ethernet (5, 5') de données relatives à la sécurité.

10. Produit de programme d'ordinateur comportant des moyens à code de programme permettant, lors de son exécution sur une unité de calcul d'un dispositif de commande selon l'une quelconque des revendications 7 à 9, de configurer l'unité de calcul afin qu'elle exécute les étapes de procédé correspondantes.
